# EUROPÄISCHE PATENTSCHRIFT

(11) **EP 2 508 276 B1**
(45) Veröffentlichungstag und Bekanntmachung des Hinweises auf die Patenterteilung: **17.12.2014**
(21) Anmeldenummer: 12163139.4
(22) Anmeldetag: 04.04.2012
(51) Int. Cl.: B21D 43/24, B21D 35/00, B65G 59/02

(54) **Blechentnahmestation**
Sheet metal removal station
Station de prélèvement de tôles

(30) Priorität: 04.04.2011 AT 4702011
(43) Veröffentlichungstag der Anmeldung: 10.10.2012
(73) Patentinhaber: Trumpf Maschinen Austria GmbH & CO. KG., 4061 Pasching (AT)
(72) Erfinder: Denkmeier, Thomas, 4050 Traun (AT); Fischereder, Bernhard, 4870 Vöcklabruck (AT); Hiebl, Simon, 4483 Hargelsberg (AT)
(74) Vertreter: Burger, Hannes

(56) Entgegenhaltungen:
- EP-A1- 1 914 023
- DE-A1-102005 002 499
- FR-A1- 2 609 699
- GB-A- 2 462 499
- JP-A- 4 317 935
- JP-A- 2010 194 567
- US-A- 2 743 923
- US-A- 6 006 638
- US-B1- 6 468 025

## Beschreibung

Die Erfindung betrifft eine Blechentnahmestation gemäß dem Oberbegriffs des Anspruchs 1.

Solch eine Blechentnahmestation ist z.B. in der GB-A-2462499 offenbart.

Bei der automatisierten Blechbearbeitung muss Blech aus einem Lager bzw. von einem vorhergehenden Bearbeitungsschritt, der den nächsten Bearbeitungsschritt durchführenden Werkzeugmaschine bereitgestellt werden. Da es sich bei den Blechen zumeist um metallische Werkstoffe handelt, bevorzugt handelt es sich dabei um Eisenbleche, sind die Einzelbleche zumeist mit einer Oberflächen-Schutzbehandlung versehen bzw. kann aus vorhergehenden Behandlungsschritten ein Film einer Bearbeitungs-Hilfsflüssigkeit an der Blechoberfläche anhaften. Insbesondere kann es sich dabei um ölige Substanzen handeln, die aufgrund ihrer Schmiereigenschaften die Bearbeitung bzw. den Transport erleichtern bzw. einen Oberflächenschutz ausbilden. Derartige dünne Filmschichten auf Oberflächen haben jedoch den Nachteil, dass dadurch eine adhäsive Haftschicht gebildet wird und somit die beiden Blechteile sehr gut aneinander haften. Für die weitere Verarbeitung ist es jedoch unbedingt erforderlich, dass nur Einzelbleche der Werkzeugmaschine zugeführt werden, ohne dass dafür eine Arbeitshandlung eines Maschinenbedieners erforderlich ist.

Da es ferner bei der Lagerung bzw. im Produktionsfortschritt immer wieder dazu kommen kann, dass die Ausrichtung des Einzelblechs innerhalb des Blechstapels geringfügig variiert, ist eine automatisierte Weiterverarbeitung nicht möglich, da diese Ausrichtungsungenauigkeiten zumeist mittels eines manuellen Ausrichtschritts korrigiert werden müssen.

Aus der EP 9 052 131 A ist beispielsweise eine Vorrichtung bekannt, bei der Blech aus einem Stapel mittels einer Ausschubvorrichtung abgenommen wird, wobei durch Anpassung der Ausschubhöhe jeweils das zuoberst liegende Blech vom Stapel abgezogen wird.

Auch die JP 2001-113331 A offenbart eine Blechtransportvorrichtung mit einem Anschlag, sodass im Fall von aneinanderhaftenden Blechen eine zuverlässige Trennung gewährleistet ist und nur ein Blech weiter transportiert wird.

Die US 2,743,923 A offenbart eine Vorrichtung zur Manipulation von Blechteilen, welche Blechteile auf einem Stapel vorausgerichtet bereitgestellt sind. Von der Manipulationsvorrichtung wird der oberste Blechteil vom Stapel abgenommen und in einer Zwischenablage abgelegt. Während der Bewegung des obersten Blechs vom Stapel auf die Zwischenposition, wird gleichzeitig ein auf dieser Zwischenposition abgelagertes Blech von einer mit der Manipulationsvorrichtung gekoppelten Vorschubvorrichtung in die Biegepresse weiterbefördert. Es ist ferner offenbart, dass eine Vorrichtung vorhanden ist, um im Fall einer ungewollten Mehraufnahme von Blechen, die zu viel aufgenommenen Bleche wieder zu entfernen. Zur Trennung der Bleche bei der Aufnahme ist vorgesehen, dass beispielsweise Luft oder Vibrationen die Trennung erleichtern soll. Mittels einer Vorrichtung wird dabei eine Kante eines der Bleche aufgehoben und mittels einer Erfassungsvorrichtung erkannt, ob die gewünschte Anzahl von Blechen aufgenommen wurde. Wurden unerwünscht zu viele Bleche aufgenommen, wird eine Vorrichtung aktiviert, um die unerwünscht aufgenommenen Bleche zu separieren und zurück auf den Stapel zu befördern. Die Erfassung der Anzahl der aufgenommenen Bleche erfolgt dabei unmittelbar nachdem die Bleche abgehoben wurden und sich somit immer noch in einer Position befinden, sodass unbeabsichtigt aufgenommene Bleche wieder zurück auf den Stapel gegeben werden können.

Die GB 24 62 499 A offenbart ein System zum Transport von nicht-Eisen-Blechen, wobei die Entnahme eines einzelnen Bleches von einem Stapel dadurch erreicht wird, dass die Aufnahmevorrichtung periodische Ultraschallschwingungen innerhalb des obersten Blechteiles erzeugt, um somit die Viskosität des Beschichtungsöls der Bleche zu reduzieren. Um sicher zu stellen, dass lediglich das oberste Blech in Schwingungen versetzt wird, ist offenbart, das mittels einer Formel unter Berücksichtigung des elektrischen Widerstands und der relativen Permeabilitätskonstante des Materials, die Eindringtiefe einer Elektromagnetischen Schwingung in ein nicht-Eisen-Blech ermittelt werden kann. Neben einer Anregung mit elektromagnetischen Wellen ist aus dem Dokument auch bekannt, dass eine Vibration über einen direkten Kontakt mit einem Vibrationselementes wie beispielsweise einem Piezo-Elektrischen- oder magnetostriktiven Element erzeugt werden kann.

Die US 6,468,025 B1 offenbart eine Manipulationsvorrichtung, insbesondere eine Separationsvorrichtung, zur Aufnahme von Einzelblechen aus einem Blechstapel. Insbesondere offenbart das Dokument, dass Druckluft dazu verwendet wird, um eine Separation eines einzelnen Bleches zu gewährleisten, welches Blech von einer Vakuum-Saugvorrichtung an einer Ecke angehoben wurde. Es ist vorgesehen, dass eine zum Blechstapel relativ bewegbare Druckdüsenanordnung derart positioniert wird, dass eine der Druckdüsen im Nahbereich der Seitenkante des obersten Blechs angeordnet ist. Wird nun die Seitenkante bzw. das Eck des obersten Blechs angehoben und dabei über die Druckdüse Druckluft auf die Blechkante gelenkt, wird Luft zwischen das oberste und einem evtl. an diesem anhaftenden zweiten Blech gelenkt und somit eine Vereinzelung des obersten abzuhebenden Bleches erreicht.

Die FR 2 609 699 offenbart eine Vorrichtung, bei der mittels eines Vakuumsaugers, Blech von einem Blechstapel abgenommen wird. Mittels eines zweiten Vakuumsaugers, der unter die abgehobenen Bleche einschwenkt, wird nun das überzählige zuunterst angeordnete Blech abgenommen und mittels einer Separationsvorrichtung und eines Gegenhalters wieder zurück auf den Blechstapel befördert. Wurden alle irrtümlich abgehobenen Bleche wieder zurück auf den Stapel befördert, wird das nun vereinzelte Blech von dem erneut einschwenkenden Aufnehmer übernommen und der weiteren Verarbeitung zugeführt.

Die JP 2010-194567 offenbart eine Vorrichtung zur Vereinzelung von Blechen, bei der das oberste Blech mittels einer Unterdruck-Entnahmevorrichtung abgenommen wird. Die Bleche sind dabei auf einem Stapel angeordnet, welcher Stapel mittels einer Führungsvorrichtung vor-ausgerichtet wird. Im Bereich der Aufnahmeposition ist eine Druckluftvorrichtung angeordnet, welche Druckluft in den Spalt des sich abhebenden obersten Bleches und dem darunter angeordneten Blech einlenkt und somit eine Trennung bewerkstelligt.

Die DE 10 2005 002 499 A1 offenbart eine Vorrichtung zum Vereinzeln von plattenförmigen Substraten mit metallischen Eigenschaften, bei der nach Abheben des obersten Elementes geprüft wird, ob ein oder mehrere Substrate abgehoben wurden. Im Fall einer Mehrfachabhebung wird eine Rütteleinheit aktiviert, um die unbeabsichtigt mehrfach aufgenommenen Substrate vom obersten Substrat zu trennen, sodass gesichert lediglich ein Substrat abgenommen wird. Es ist offenbart, dass im Gegensatz zu ähnlichen bekannten Vorgangsweisen die Vereinzelung nur dann aktiviert wird, wenn eine Mehrfachaufnahme detektiert wurde.

Die US 6,006,638 A offenbart eine Vereinzelungsvorrichtung, bei der mittels einer Vakuum-Aufnahmevorrichtung das oberste Blech eines Blechstapels abgenommen wird und mittels einer magnetischen Trennvorrichtung sicher gestellt wird, dass lediglich das oberste Blech vom Stapel abgenommen wird.

Aus der EP 1 914 023 A1 ist bekannt, dass Bleche, welche in einem Stapelschacht vorausgerichtet angeordnet sind, mittels eines Vakuumgreifers entnommen werden und der weiteren Verarbeitung zugeführt werden.

Die JP 4-317935 offenbart, dass ein elektromagnetisches Feld auf eine nicht magnetische Metallplatte gerichtet wird und zusätzlich ein Vibrationselement aktiviert wird, um somit gezielt einen seitlichen Abschnitt des obersten Bleches anzuheben und dieses oberste Blech zuverlässig vom Stapel abzuziehen.

Die aus dem Stand der Technik bekannten Vorrichtungen sind allesamt eigenständig ausgebildet, insbesondere sind die für eine spezifische Kombination eines Blechstapels und einer Werkzeugmaschine vorgesehen. Insbesondere erfordern jedoch die bekannten Vorrichtungen eine Integration in den Zuführprozess zur Werkzeugmaschine, insbesondere ist dafür ein entsprechender Freiraum im Bereich der Werkzeugmaschine vorzusehen. Auch sind die bekannten Vorrichtungen nicht flexibel genug, um sowohl die Vereinzelung, als auch die Ausrichtung der Blechteile individuell durchführen zu können, ohne dass bei einem Materialwechsel umfangreiche Konfiguration und Umrüstarbeiten erforderlich sind.

Die Aufgabe der Erfindung liegt also darin, eine Blechentnahmestation zu schaffen, welche ein ausgerichtetes Einzelblech aus einem Blechstapel einer Werkzeugmaschine zuführt und dabei die Nachteile des Standes der Technik überwindet.

Die Aufgabe der Erfindung wird durch eine Blechentnahmestation gemäß den Merkmalen des Patentanspruchs 1 gelöst, welche eine Aufnahmevorrichtung für eine Mehrzahl von Blechen, eine Vereinzelungsvorrichtung, eine Ausrichtvorrichtung und eine Übergabevorrichtung aufweist, wobei die Aufnahmevorrichtung oder die Vereinzelungsvorrichtung ein Vibrationselement aufweist und wobei die Übergabevorrichtung ein Einzelblech in einer Vorzugsausrichtung an eine nachgelagerte Bearbeitungsmaschine übergibt. Da erfindungsgemäß die Aufnahmevorrichtung oder die Vereinzelungsvorrichtung ein Vibrationselement aufweist, ist sichergestellt, dass nur ein Blechteil, insbesondere das am Stapel zuoberst liegende Blechteil, entnommen und der weiteren Verarbeitung zugeführt wird. Eine Vereinzelungsvorrichtung mittels eines Vibrationselements hat nun den Vorteil, dass mittels Vibrationen anhaftende Blechteile zuverlässig und insbesondere ohne großen Energieaufwand getrennt werden können. Insbesondere ist bei einer Schwingungstrennung die Gefahr einer Beschädigung der Oberfläche nicht gegeben. Da sich Vibrationen ferner lokal sehr gut einschränken lassen, ist es möglich, diese sehr gezielt einwirken zu lassen, was für die Gesamtbelastung der Komponenten der Blechentnahmestation von Vorteil ist und ferner den Energiebedarf für die Erzeugung der Vibrationen reduziert.

Ferner weist die Ausrichtvorrichtung einen Ausschiebeschlitz auf, so dass nach dem Ausrichten des Blechs eine Ausschubvorrichtung aktiviert werden kann, um das ausgerichtete Blech über den Ausschiebeschlitz der Übergabevorrichtung zuführen zu können. Die Schlitzbreite ist nun bevorzugt derart ausgebildet, dass sie kleiner als die doppelte Dicke des zu vereinzelnden Bleches ist.

Erfindungsgemäß ist ferner vorgesehen, dass die Übergabevorrichtung ein von der Vereinzelungsvorrichtung bereitgestelltes Einzelblech in einer Vorzugsausrichtung an eine nachgelagerte Bearbeitungsmaschine übergibt. Durch die erfindungsgemäße Ausgestaltung ist nun gewährleistet, dass der Werkzeugmaschine ein Einzelblech zugeführt wird, im Wesentlichen unabhängig davon, wie das Blech der Blechentnahmestation, insbesondere der Aufnahmevorrichtung zugeführt wurde.

Da in automatisierten Fertigungssystemen vor einer Werkzeugmaschine eine Bereitstellung von zu bearbeitenden Werkteilen, insbesondere von Blechen vorgesehen sein muss, kann durch Austauschen der vorhandenen Blechbereitstellungsvorrichtung durch die erfindungsgemäße Blechentnahmestation in vorteilhafterweise gewährleistet werden, dass die Funktionalitäten Bereitstellen bzw. Lagern, Vereinzeln und Ausrichten von einer einzelnen Vorrichtung übernommen werden, ohne dass zusätzliche bauliche Maßnahmen erforderlich wären bzw. dass der Produktionsablauf zur Einbindung derartiger Funktionalität geändert werden müsste.

Nach einer Weiterbildung ist das Vibrationselement durch einen Rotor mit exzentrischer Masse gebildet, wobei in einer bevorzugten Ausbildung, der Rotor pneumatisch angetrieben wird. Es ist jedoch auch möglich, dass der Rotor hydraulisch oder elektrisch angetrieben wird..

Eine mögliche Weiterbildung besteht darin, dass die Vereinzelungsvorrichtung in der Aufnahmevorrichtung integriert angeordnet ist, womit insbesondere ein kompakterer Aufbau der Blechentnahmestation erreicht wird. Ferner kann die Vereinzelungsvorrichtung unabhängig von der Ausrichtevorrichtung und der Übergabevorrichtung aktiviert werden, wodurch eine Steigerung des Durchsatzes erreicht wird.

Eine Weiterbildung besteht auch darin, dass die Aufnahmevorrichtung eine Auflagefläche mit Anlegemittel aufweist, wobei das Vibrationselement mit der Auflagefläche bewegungsverbunden ist. Dadurch können Blechteile in der Aufnahmevorrichtung abgegeben werden, insbesondere auf der Auflagefläche abgelegt werden und hernach das Vibrationselement aktiviert werden. Durch die Vibration, welche beispielsweise eine gerichtete Bewegungsrichtung aufweist, kann nun der gesamte Blechstapel in Vibration gesetzt werden, sodass sich die Blechteile gegen die Anlegemittel bewegen werden. Die Anlegemittel können nun beispielsweise so ausgebildet sein, dass von der Vereinzelungsvorrichtung ausschließlich das zuoberst angeordnete Blecht abgenommen werden kann. Beispielsweise können die Anlegemittel längsveränderlich ausgebildet sein und somit eine Art Anschlag ausbilden, sodass lediglich das zu oberst liegende Blech abgenommen werden kann. Bei einer derartigen Ausbildung ist die Länge der Anlegemittel auf die Anzahl der Bleche in der Aufnahmevorrichtung, also auf die Höhe des Blechstapels abgestimmt, insbesondere kann dies mittels Antriebsmittel adaptiv festgelegt werden.

Von Vorteil ist ferner eine Weiterbildung, nach der die Auflagefläche der Aufnahmevorrichtung um einen Winkel gegenüber der Horizontalen geneigt ist. Mit dieser Ausbildung wird die Schwerkraftwirkung auf die Blechteile ausgenutzt, sodass eine Vorvereinzelung bzw. eine Vorausrichtung gegeben ist, bzw. dass der Kraftaufwand zur Vereinzelung bzw. zur Ausrichtung reduziert wird, da durch die geneigte Ausrichtung ein Abgleiten der Bleche aneinander erleichtert wird bzw. die Normalkraft auf die Oberflächen der aneinander anliegenden Blechteile verringert wird. Ein weiterer Vorteil einer geneigten Auflagefläche liegt darin, dass ein anhaftendes Blech, welches sich nicht sofort beim Abheben sondern sich erst im abgehobenen Zustand vom obersten Blech löst, beim Auftreffen auf den geneigten Blechstapel selbsttätig gegen eine Anschlagvorrichtung rutscht und sich somit ausrichtet.

Von Vorteil hat sich erwiesen, dass gemäß einer Weiterbildung der Winkel der Neigung der Aufnahmefläche gegenüber der Horizontalen, größer dem Arcustangens des Haftreibungskoeffizienten µ ist. Dadurch wird erreicht, dass die Haftreibung zwischen den Blechen überwunden wird und diese somit selbständig aneinander abgleiten. Dies kann nun beispielsweise dazu ausgenutzt werden, das Blech vom Blechstapel abgenommen bzw. abgezogen wird, wobei ein gegebenenfalls anhaftendes Blech aufgrund der geneigten Anordnung und unter gegebenenfalls aufgebrachten Vibrationen selbsttätig abgleiten wird und somit eine zuverlässige Vereinzelung gewährleistet ist.

Da sich aufgrund der Oberflächengegebenheiten der Bleche in der Aufnahmevorrichtung der Haftreibungskoeffizient µ ändern kann, ist eine Weiterbildung von Vorteil, nach der die Aufnahmevorrichtung ein Stellmittel zur Veränderung des Winkels aufweist. Eisenbleche sind zumeist aus Rostschutzgründen mit einem Ölfilm überzogen, welcher einen anderen Reibungskoeffizienten aufweist, als unbehandeltes Blech. Daher wird auch der sich aus dem arctan µ ergebende Winkel unterschiedlich sein, ab dem selbsttätig ein Abgleiten zweier Blechteile einsetzt. Um eine aufwändige und zeitraubende Änderung des Winkels zwischen der Auflagefläche und der Horizontalen zu vermeiden, insbesondere da hier gegebenenfalls große Massen zu bewegen sind, wird dieses Stellmittel beispielsweise durch eine von einem Elektromotor über ein Übersetzungsgetriebe angetriebenen Schubstange gebildet sein. Auch kann eine hydraulisch betätigte Schwenkvorrichtung das Stellmittel bilden.

Eine Weiterbildung besteht auch darin, dass die Vereinzelungsvorrichtung in die Ausrichtvorrichtung integriert angeordnet ist. Diese Weiterbildung ist dahingehend von Vorteil, dass wiederum eine kompaktere Blechentnahmestation gebildet werden kann bzw. dass zwei Arbeitsschritte, das Vereinzeln und das Ausrichten, zusammen ausgeführt werden können, wodurch wiederum der Durchsatz erhöht werden kann.

Nach einer Weiterbildung kann die Ausrichtvorrichtung eine Anschlagvorrichtung und ein Gegendruckmittel aufweisen. Die Aufgabe der Ausrichtvorrichtung liegt darin ein Blech, welches in einer zumeist nicht exakt festlegbaren Ausrichtung vorliegt, in eine Vorzugsrichtung überzuführen, um anschließend die entsprechenden Bearbeitungsschritte durchführen zu können. Durch Anlage des Blechs an einer Anschlagvorrichtung und durch Aktivieren des Gegendruckmittels kann einerseits die Ausrichtung des Blechs erzwungen werden und kann ferner diese Ausrichtung bis zur Übergabe an die nachgelagerte Bearbeitungsmaschine sicher aufrecht erhalten werden. Das Gegendruckmittel kann beispielsweise durch federvorgespannte Anschlagmittel wie Druckstifte oder Zentrierschablonen gebildet sein. Es ist auch eine Ausbildung als pneumatisch oder hydraulisch betätigtes Druckelement möglich. Die Ausrichtvorrichtung ist jedenfalls derart ausgebildet, dass das Gegendruckmittel eine ausreichende Kraft auf das auszurichtende Blechteil ausüben kann, um auch bei einer größeren Abweichung von der Sollausrichtung, das Blech derart bewegen zu können, dass die Vorzugsausrichtung sicher eingenommen wird.

Dahingehend ist auch eine Weiterbildung von Vorteil, nach der die Ausrichtvorrichtung eine Kulissenführung aufweist, da somit das Blech bei Übernahme bzw. Übergabe in die Ausrichtvorrichtung, durch Abgleiten an den vorgegebenen Kulissen die gewünschte Vorzugsausrichtung selbsttätig einnimmt. Die Kulissenführung kann auch derart ausgebildet sein, dass mehrere durch Antriebsmittel angetriebene oder bewegte Anschlagmittel sukzessive definierte Bewegungen ausführen und somit durch Bewegung des Blechteils über mehrere Ausrichtabschnitte den gewünschten Ausrichtzustand zuführen. Beispielsweise kann die Kulissenführung durch einen zumindest zweigeteilten Rahmen gebildet sein, bei dem auf einem feststehenden Rahmenteil mehrere Anschlagmittel vorhanden sind und wobei der zweite Rahmenteil ebenfalls mehrere Anschlagmittel aufweist, wobei der Rahmenteil mittels einer Kulissenführung eine vordefinierte Bewegung ausführt, um das Blech gegen die Anschlagmittel des feststehenden Rahmenteils zu drücken und somit die Vorzugsausrichtung herzustellen.

In einer Weiterbildung ist es ferner möglich, dass die Ausrichtvorrichtung und die Vereinzelungsvorrichtung integriert ausgebildet sind bzw. dass die Ausrichtvorrichtung Komponenten der Vereinzelungsvorrichtung aufweist. Das Ausschubmittel, beispielsweise ein Pneumatik- oder Hydraulikzylinder bzw. ein Linearantrieb, wird nun bei Aktivierung genau das zuoberst liegende Blech durch den Ausschiebeschlitz bewegen, sodass zugleich bzw. unmittelbar nach der Ausrichtung des Blechs, auch die Vereinzelung durchgeführt werden kann.

Von Vorteil ist ferner eine Weiterbildung, nach der die Schlitzbreite des Ausschiebeschlitzes einstellbar ausgebildet ist, um die erfindungsgemäße Blechentnahmestation auf eine Mehrzahl unterschiedlicher zu verarbeitender Bleche einstellen zu können, insbesondere wenn die Ver änderung der Schlitzbreite durch ein elektrisch, hydraulisch oder pneumatisch verstellbares Antriebsmittel erfolgt, sodass eine fernbetätigte Verstellung der Schlitzbreite möglich ist.

Von Vorteil ist ferner eine Weiterbildung, nach der die Übergabevorrichtung durch einen Robotermanipulator mit einem Blechaufnahmemittel gebildet ist, welches Blechaufnahmemittel durch einen Greifaufsatz, oder einen Vakuumsauger, oder einem Magnethalter gebildet sein kann. Ein Robotermanipulator hat insbesondere den Vorteil, dass er verschiedenste Bewegungsbahnen ausbilden kann und somit für die Positionierung der Blechentnahmestation in Relation zur Bearbeitungsmaschine größere Freiheiten gegeben sind. Insbesondere kann mittels eines Robotermanipulators sowohl ein Horizontalversatz, als auch eine Rotation des übernommenen Blechstücks bei der Überführung von der Blechentnahmestation zur Werkzeugmaschine durchgeführt werden. In Abhängigkeit von der Dimension bzw. von geometrischen bzw. strukturellen Gegebenheiten des überzuführenden Blechteiles, kann das Blechaufnahmemittel des Robotermanipulators durch einen Greifaufsatz, einen Vakuumsauger, oder einen Magnethalter gebildet sein. Dabei ist es ferner von Vorteil, wenn das Blechaufnahmemittel koppelbar mit dem Robotermanipulator verbunden ist, sodass ein schneller Austausch des Aufnahmemittels möglich ist und somit die Vielzahl der verarbeitbaren Bleche gesteigert werden kann.

Eine vorteilhafte Weiterbildung erhält man auch dadurch, dass das Vibrationselement im Blechaufnahmemittel angeordnet ist. Durch diese Weiterbildung ist es beispielsweise möglich, dass bei Aufnahme des Blechteils durch die Übergabevorrichtung das Vibrationselement aktiviert werden kann und somit ein gegebenenfalls anhaftendes, zweites Blech zuverlässig von dem zu übergebenden Blechteil getrennt werden kann. Beispielsweise kann die Vereinzelung nun derart durchgeführt werden, dass das Blechteil von dem Blechaufnahmemittel aufgenommen und leicht angehoben werden kann, gegebenenfalls unter Bildung einer entsprechenden Neigung des aufgenommenen Blechs gegenüber der Horizontalen, um hernach durch Aktivierung des Vibrationselements ein gegebenenfalls anhaftendes Blech zu trennen.

Nach einer Weiterbildung ist vorgesehen, dass die Übergabevorrichtung ein Gewichtserfassungsmittel aufweist, da über das Gewicht der angehobenen Bleche erkannt werden kann, falls mehr als ein Blech vom Blechstapel abgenommen wurde. Da sich aus den geometrischen Abmessungen des zu übergebenen Blechteils direkt das entsprechende Gewicht ableiten lässt und es bei anhaften eines oder mehrerer weiterer Bleche an dem zu übergebenden Blechteil das Gesamtgewicht der von der Übergabevorrichtung erfassten Bleche das Vielfache des Einzelgewichts eines Bleches betragen wird, kann durch Auswertung des Gewichts des abgehobenen Bleches ermittelt werden, ob mehr als ein Blech abgenommen wurde, bzw. bei entsprechend genauer Erfassung des Gewichts, wie viel Bleche abgenommen wurden.

Ebenfalls zur Prüfung ob mehr als ein Blech abgenommen wurde, ist eine Weiterbildung von Vorteil, nach der die Übergabevorrichtung eine Dickenmessvorrichtung aufweist. Diese Dickenmessvorrichtung kann beispielsweise optisch als Lichtschranke ausgebildet sein, bei der das abgenommene Blech in einer definierten Geschwindigkeit an der Dickenmessvorrichtung vorbeigeführt wird und die Zeitdauer der Unterbrechung einer Lichtschranke direkt proportional zur Dicke des abgenommenen Bleches ist. Ebenfalls möglich ist eine Ausbildung bei der die Dickenmessvorrichtung durch einen Taststab gebildet ist, welcher Kontakt mit dem abgenommenen Blech aufnimmt und durch Differenzbildung zwischen einem Referenzpunkt der Übergabevorrichtung und dem Kontaktpunkt der Dickenmessvorrichtung die Anzahl der abgenommenen Bleche ermittelt. Auch ist eine Ultraschall basierte Dickenmessung möglich.

Da die zu vereinzelnden Blechteile gegebenenfalls einen markanten Umriss aufweisen bspw. Kanten, Vorsprünge und/oder Fahnen, weist gemäß einer Weiterbildung die Ausrichtvorrichtung mehrere Auswurffinger auf, welche in einer Haltevorrichtung der Vereinzelungsvorrichtung angeordnet sind. Die Haltevorrichtung ist bevorzugt durch eine Grund- und eine Gegendruckplatte gebildet, welche beiden Platten durch Klemmmittel lösbar miteinander verbunden sind. Insbesondere ist es damit jedoch möglich, die Auswurffinger dazwischen anzuordnen und entsprechend auf die äußere Geometrie des Blechteils auszurichten und dann fest zu klemmen. Insbesondere lässt sich durch die Anordnung der Auswurffinger die gewünschte Ausrichtung festlegen, um damit eine Vielzahl unterschiedlicher Formen von Blechteilen ausrichten und vereinzeln zu können.

Nach einer Weiterbildung ist vorgesehen, dass die Auflagefläche gegenüber einer Grundfläche der Aufnahmevorrichtung durch ein Druckmittel beabstandet angeordnet ist. Diese Ausbildung kann bspw. dann von Vorteil sein, wenn es aufgrund von Umgebungsverhältnissen um die Aufnahmevorrichtung, die Oberflächengüte des Blechstapels beeinträchtigt werden könnte. Mit dieser Weiterbildung werden die Bleche des Blechstapels von den Anlegemittel der Aufnahmevorrichtung gegen Umgebungseinflüsse geschützt.

Zur Ausbildung einer weiteren möglichen Vorausrichtung ist gemäß einer Weiterbildung vorgesehen, dass die Anschlagvorrichtung über ein Stellmittel relativ zur Auflagefläche verstellbar ausgebildet ist.

Die Aufgabe der Erfindung wird auch durch ein Verfahren zur Bereitstellung eines Bleches aus einem Blechstapel gelöst. Dabei wird eine Mehrzahl an Blechen bei der Aufnahmevorrichtung abgegeben, wodurch ein Blechstapel gebildet wird. Die Bleche können ungeordnet, mit einer Vororientierung bzw. geordnet abgegeben werden. Kommen die Bleche bereits aus einem vorhergehenden Arbeitsschritt, wird zumeist eine grobe Vororientierung gegeben sein, die Bleche werden also in einer grundlegenden Orientierung vorliegen. Es ist aber auch möglich, dass die Bleche bereits genau ausgerichtet an der Aufnahmevorrichtung abgegeben werden, sodass im nachfolgenden Ausrichtvorgang nur noch geringe Korrekturen vorgenommen werden. Erfindungsgemäß ist es nun möglich, dass zuerst die Vereinzelungsvorrichtung aktiviert wird und dadurch, das zuoberst am Blechstapel befindliche Blech von darunter liegenden Blechen getrennt wird und dann die Ausrichtvorrichtung das vereinzelte Blech in eine Vorzugsrichtung überführt. Erfindungsgemäß ist es jedoch auch möglich, dass zuerst die Vorzugsausrichtung hergestellt wird, gegebenenfalls können hier auch mehrere Bleche in diese Vorzugsausrichtung übergeführt werden und dann erst die Vereinzelung durchgeführt wird. Wesentlich ist jedoch, dass der abschließende Verfahrensschritt, bei dem die Übergabevorrichtung das vereinzelte und ausgerichtete Blech an einen Bearbeitungsplatz übergibt. Somit ist durch die erfindungsgemäßen Verfahren sichergestellt, dass das Blech, welches in einer im Wesentlichen beliebigen Ordnung an der Aufnahmevorrichtung abgegeben wird, vereinzelt und genau ausgerichtet an einem Bearbeitungsplatz übergeben wird, unabhängig von der Oberflächenbeschaffenheit der Bleche sowie der geometrischen Abmessungen der Bleche, insbesondere der Blechdicke.

Zum besseren Verständnis der Erfindung wird diese anhand der nachfolgenden Figuren näher erläutert.

Es zeigen jeweils in stark schematisch vereinfachter Darstellung:
- Fig. 1: die einzelnen Verfahrensschritte an einer Vorrichtung zur Blechbereitstellung;
- Fig. 2: eine mögliche Ausbildung der Vorrichtung zur Durchführung des erfindungsgemäßen Verfahrens;
- Fig. 3: a) bis d) eine weitere mögliche Ausbildung der Vorrichtung zur Durchführung des erfindungsgemäßen Verfahrens mit einer geneigten Aufnahmeebene;
- Fig. 4: a) bis d) eine weitere mögliche Ausbildung der Vorrichtung zur Durchführung des erfindungsgemäßen Verfahrens mit einer Kulissenführung;
- Fig. 5: eine weitere mögliche Ausbildung der Vorrichtung zur Durchführung des erfindungsgemäßen Verfahrens mit variablen Ausricht- und Vereinzelungsmitteln;
- Fig. 6: a) und b) eine weitere mögliche Ausbildung der Vorrichtung zur Durchführung des erfindungsgemäßen Verfahrens mit variablen Ausricht- und Vereinzelungsmittel;
- Fig. 7: eine weitere mögliche Ausbildung der Vorrichtung zur Durchführung des erfindungsgemäßen Verfahrens.

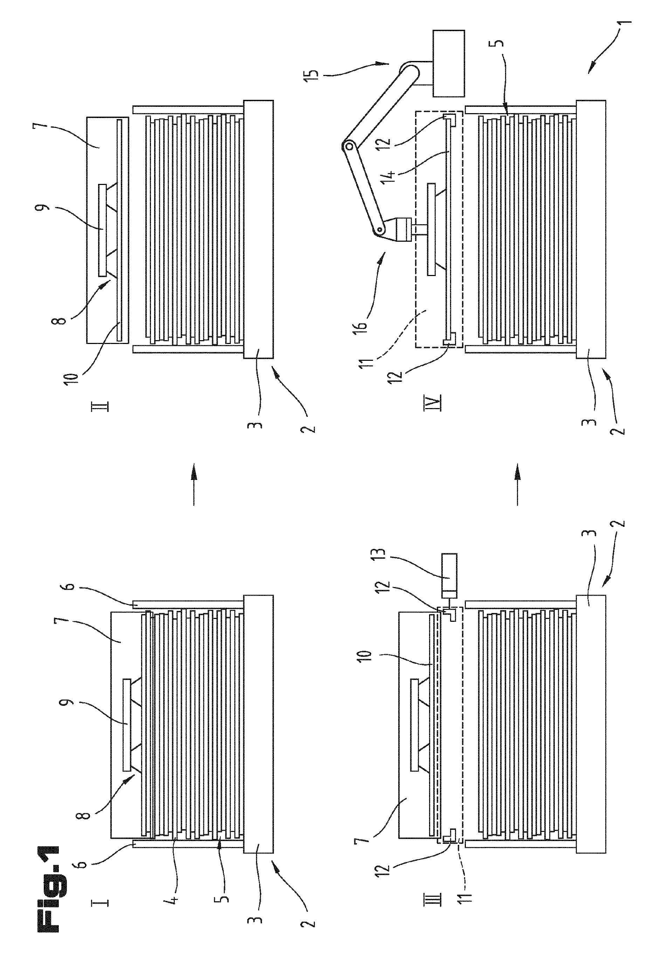

Fig. 1 zeigt schematisch die Verfahrensschritte ausgeführt auf einer erfindungsgemäßen Blechentnahmestation 1. Im ersten Abschnitt I ist die Aufnahmevorrichtung 2 dargestellt, wobei auf einer Auflagefläche 3 mehrere Bleche 4 übereinander angeordnet sind und somit einen Blechstapel 5 bilden. Die Aufnahmevorrichtung 2 weist ferner Anlegemittel 6 auf, mit welchen eine grobe Vorausrichtung der Bleche 4 des Blechstapels 5 möglich ist. Insbesondere ist es damit möglich, das Blech im Wesentlichen unausgerichtet an der Aufnahmevorrichtung 2 abgegeben wird und durch die Anlegemittel 6 eine grobe Vorausrichtung hergestellt wird.

In der Fig. 1 ist ein mögliches Verfahren dargestellt, bei dem als erster Verfahrensschritt die Vereinzelung der Bleche des Blechstapels durchgeführt wird. Dazu wird eine Vereinzelungsvorrichtung 7 aktiviert, welche das zuoberst angeordnete Blech vom Blechstapel 5 abnimmt. Die Vereinzelungsvorrichtung kann nun beispielsweise ein Blechaufnahmemittel 8 aufweisen, welches Blechaufnahmemittel beispielsweise durch einen mechanischen Greifer, einen Vakuumsauger oder einen Elektromagneten gebildet sein kann. Das Blechaufnahmemittel 8 weist ferner ein Vibrationselement 9 auf, welches bei Anheben der Vereinzelungsvorrichtung 7 aktiviert wird und somit Schwingungen generiert, die sich über das Blechaufnahmemittel 8 auf das zuoberst angeordnete Blech und ferner auch auf ein gegebenenfalls am abgenommen Blech haftendes weiteres Blech übertragen. Durch diese Schwingungen kommt es zur Überwindung der Haftkräfte zwischen dem abgehobenen und dem gegebenenfalls anhaftenden Blech, sodass sich das anhaftende Blech löst und nur das oberste, vereinzelte Blech der weiteren Verarbeitung zugeführt wird. Dieser Fall ist in Abschnitt II in Fig. 1 dargestellt.

Abschnitt III zeigt nun den nächsten Verfahrensschritt, bei dem das vereinzelte Blech 10 in eine Vorzugsausrichtung übergeführt wird. Dazu wird das vereinzelte Blech 10 an eine Ausrichtvorrichtung 11 übergeben, welche Ausrichtvorrichtung vereinfacht dargestellt, mehrere Orientierungsmittel 12 aufweist, um ein vereinzeltes Blech 10 mit einer gegebenen Abweichung von einer gewünschten Vorzugsausrichtung, in diese bevorzugte Ausrichtung überzuführen. Dazu kann beispielsweise ein Teil der Orientierungsmittel 12 mit einem Antriebsmittel bewegungsverbunden ausgebildet sein, sodass dieses beispielsweise in eine Aufnahmeposition verfährt in der das vereinzelte Blech 10 eingelegt wird, woraufhin anschließend das Antriebsmittel 13 das Orientierungsmittel in die Ausrichteposition bewegt und das Blech gegen die feststehenden Orientierungsmittel 12 drückt und dadurch die Vorzugsausrichtung herstellt.

In Abschnitt IV aus Fig. 1 wird das vereinzelte und ausgerichtete Blech 14 von einer Übergabevorrichtung 15, welche bevorzugt durch einen Robotermanipulator gebildet ist, aus der Ausrichtvorrichtung 11 übernommen und an eine nicht dargestellte Bearbeitungsmaschine weitergeleitet. Die Übergabevorrichtung weist ebenfalls ein Blechaufnahmemittel 16 auf, welche das Blech 14 aufnehmen und weiterleiten kann. Erfindungsgemäß können nun die Verfahrensschritte 2 und 3 gegeneinander ausgetauscht werden, sodass nach der Abgabe der Bleche 4 an der Aufnahmevorrichtung 2 zuerst die Ausrichtung der Bleche in der Ausrichtvorrichtung 11 erfolgt und dann anschließend die Vereinzelung.

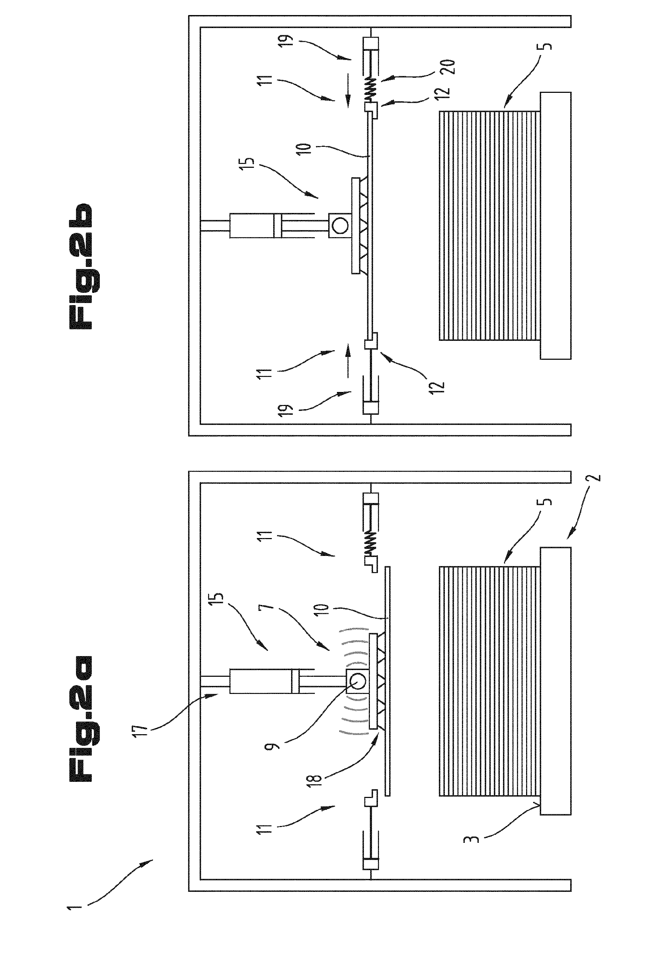

Zur Vereinfachung der Darstellung und der Beschreibung der Verfahrensschritte sind in der Fig. 1 in den Abschnitten I bis IV die Vereinzelungsvorrichtung 7, die Ausrichtvorrichtung 11 und die Übergabevorrichtung 15 als eigenständige Vorrichtungen dargestellt. Erfindungsgemäß ist es jedoch auch möglich, dass diese drei Vorrichtungen integriert angeordnet sind, also dass das Blechaufnahmemittel 16 der Übergabevorrichtung 15 aus Abschnitt IV das Blechaufnahmemittel 8 und das Vibrationselement 9 der Vereinzelungsvorrichtung 7, wie in Abschnitt I dargestellt, aufweist. In diesem Fall würde die Übergabevorrichtung 15 das Blechaufnahmemittel 16 am obersten Blech des Blechstapels 5 anordnen, das Vibrationselement aktivieren und somit eine Trennung und Vereinzelung des obersten Blechs erreichen. Eine derartige Ausführung ist in der nachfolgenden Fig. 2 detaillierter beschrieben.

Nach einer Weiterbildung kann die Vereinzelungsvorrichtung 7 auch derart ausgebildet sein, dass das Vibrationselement 9 in der Auflagefläche 3 der Aufnahmevorrichtung 2 integriert angeordnet ist und somit bei Aktivierung des Vibrationselements der gesamte Blechstapel 5 in Vibrationen versetzt wird und dass in diesem Fall ruhende Blechaufnahmemittel 8 das zuoberst angeordnete Blech erfasst und vom Blechstapel 5 vereinzelt.

Die Fig. 2 a) und b) zeigen eine Ausführung der erfindungsgemäßen Blechentnahmestation 1 bei der ein Blechstapel 5 auf einer Auflagefläche 3 der Aufnahmevorrichtung 2 angeordnet ist. In dieser Ausführung sind die Übergabevorrichtung 15 und die Vereinzelungsvorrichtung 7 integriert angeordnet.

Fig. 2a zeigt die Blechentnahmevorrichtung bei der Vereinzelung des Blechs vom Blechstapel 5, vor der Ausrichtung des Blechs durch die Ausrichtvorrichtung 11. Die Übergabevorrichtung 15 weist beispielsweise einen Hubzylinder 17 auf, welcher das Blechaufnahmemittel 18 auf das am Stapel zuoberst angeordnete Blech hinbewegen kann. Im dargestellten Fall ist das Blechaufnahmemittel 18 durch Vakuumsauger gebildet, erfindungsgemäß sind jedoch weitere Mittel zur Blechaufnahme geeignet.

Nach Anlegen des Blechaufnahmemittels 18 am zuoberst angeordneten Blech des Blechstapels 5 wird das Blechaufnahmemittel 18 aktiviert, im dargestellten Fall also Unterdruck an die Vakuumsauger gelegt, sodass das Blechaufnahmemittel 18 fest mit dem obersten Blech verbunden ist. Durch Aktivieren des Hubzylinders 17 der Übergabevorrichtung 15 wird das oberste Blech abgehoben, wobei abhängig von der Oberflächenbeschaffenheit der Bleche der Fall eintreten kann, dass nicht nur das oberste Bleche, sondern ein oder mehrere weitere Bleche durch Adhäsion aneinander haften bleiben und somit zusammen abgehoben werden. Um dies zu verhindern, wird die Vereinzelungsvorrichtung 7 aktiviert, welche insbesondere ein Vibrationselement 9 aufweist, sodass sich die Schwingungen bzw. Vibrationen über das Blechaufnahmemittel 18 auf das abzuhebende Blech übertragen. Durch diese Vibrationen werden die Haftkräfte zwischen den Blechen überwunden, sodass nur noch das oberste Blech mit dem Blechaufnahmemittel 18 verbunden bleibt und somit als vereinzeltes Blech 10 zuverlässig vom Stapel abgehoben werden kann.

Fig. 2b zeigt die Situation bei der das vereinzelte Blech 10 in der Ausrichtvorrichtung 11 angeordnet ist. Das Blech wurde von der Übergabevorrichtung 15 vom Blechstapel 5 abgehoben und in die Ausrichtvorrichtung 11 übergeben bzw. in dieser angeordnet. Die Ausrichtvorrichtung 11 kann beispielsweise mehrere Orientierungsmittel 12 aufweisen, welche feststehend und/oder beweglich ausgebildet sein können. Beispielsweise kann ein Orientierungsmittel 12 mit einem Druckzylinder 19 verbunden sein, ein weiteres Orientierungsmittel 12 kann über ein Federmittel 20 mit einem weiteren Druckzylinder 19 verbunden sein. Nach Einlegen des vereinzelten Blechs 10 in die Orientierungsmittel 12 werden die Druckzylinder 19 aktiviert, sodass das vereinzelte Blech 10 entsprechend der Ausrichtung der Orientierungsmittel 12 ausgerichtet wird.

Nach der Ausrichtung des Bleches wird dieses vom Übergabemittel 15 aus der Ausrichtvorrichtung 11 entnommen und der weiteren Verarbeitung zugeführt.

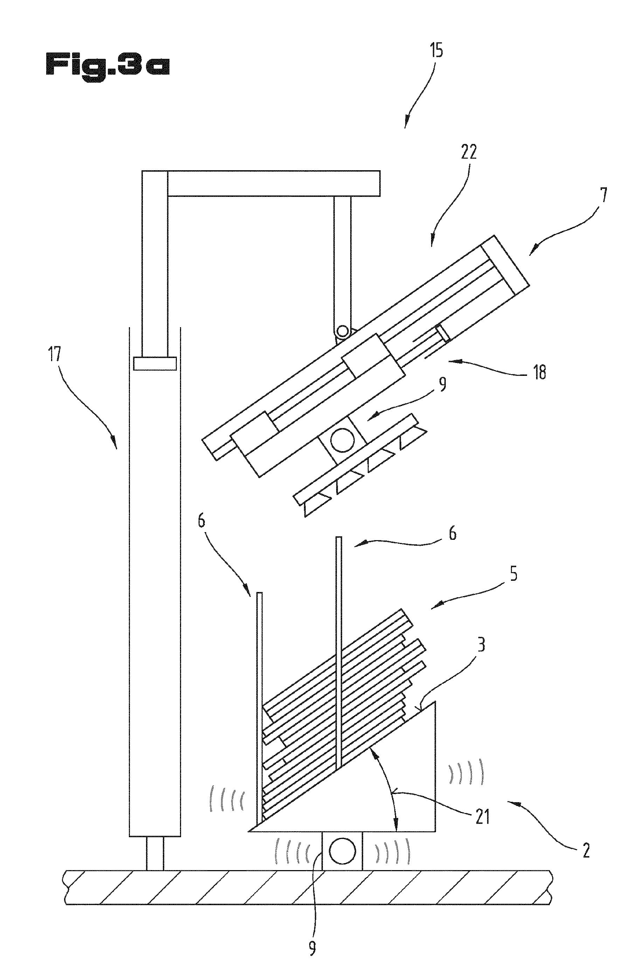

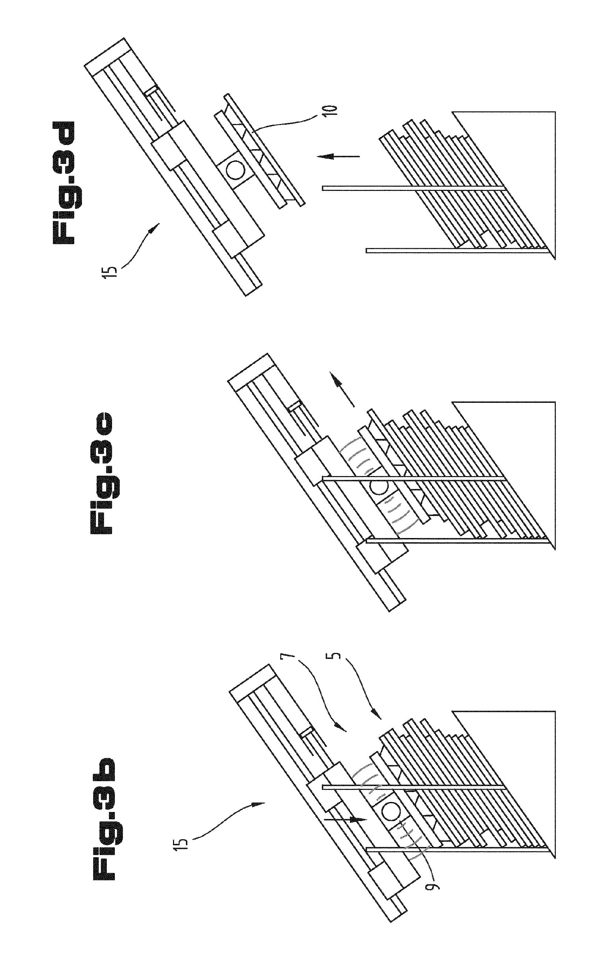

Fig. 3 zeigt eine weitere mögliche Ausführung der erfindungsgemäßen Blechentnahmestation, bei der gemäß einer vorteilhaften Weiterbildung, die Auflagefläche 3 der Aufnahmevorrichtung 2 um einen Winkel 21 gegenüber der Horizontalen geneigt ist. Die Aufnahmevorrichtung 2 weist Anlegemittel 6 auf, sodass beim Einlegen der Bleche zur Bildung des Blechstapels 5, diese aneinander abgleiten können und sich somit selbsttätig in einer Vorzugsausrichtung ausrichten. Insbesondere kann gemäß einer vorteilhaften Weiterbildung der Winkel 21 größer als der Arcustangens des Haftreibekoeffizienten µ gewählt sein, sodass durch Anordnen der Bleche aufeinander, die Haftreibungskräfte überwunden werden und die Bleche selbsttätig aneinander abgleiten und sich am Anlegemittel 6 anlegen und ausrichten. Das Blechaufnahmemittel 18 der Übergabevorrichtung 15 weist eine schräge Linearführung 22 auf, welche Linearführung das Blechaufnahmemittel 18 parallel zur Neigung der Bleche am Blechstapel 5 bewegen kann. Ferner ist ein Hubzylinder 17 vorhanden, welcher das Blechaufnahmemittel 18 auf das oberste Blech am Blechstapel 5 absenken und hernach das vereinzelte Blech abheben kann.

Am Blechaufnahmemittel 18 kann ein Vibrationselement 9 angeordnet sein, welches bei Auflegen des Blechaufnahmemittels 18 auf das oberste Blech des Blechstapels 5 aktiviert wird und somit die Schwingungen auf das oberste Blech überträgt und somit die Haftkräfte zwischen den Blechen überwindet und eine Vereinzelung der Bleche herbeiführt. In einer Weiterbildung kann aber auch ein Vibrationselement 9 in der Aufnahmevorrichtung 2 integriert angeordnet sein, welches seine Vibrationen auf den gesamten Blechstapel überträgt und somit wiederum die Vereinzelung der Bleche durchführt.

Die einzelnen Schritte der Blechvereinzelung und Übernahme sind in den Fig. 3b-d dargestellt. In Fig. 3b ist die Übergabevorrichtung 15 mit der Vereinzelungsvorrichtung 7 auf das oberste Blech des Blechstapels 5 aufgelegt und das Vibrationselement 9 der Vereinzelungsvorrichtung 7 aktiviert.

Mit aktiviertem Vibrationselement 9 wird die schräge Linearführung 22 aktiviert, wodurch das oberste Blech parallel zu den darunter liegenden Blechen ausgeschoben bzw. ausgezogen wird, wobei es aufgrund der einwirkenden Vibrationen und der Neigung der Auflagefläche zu einer Überwindung der Haftkräfte zwischen dem obersten und dem darunter liegenden Blech kommt und sich dieses somit vereinzelt aus dem Blechstapel ausziehen lässt, wie dies in Fig. 3c dargestellt ist.

In Fig. 3d wird das vereinzelte Blech 10 wird von der Übergabevorrichtung 15 abgehoben und an die weitere Verarbeitungsmaschine zugeführt.

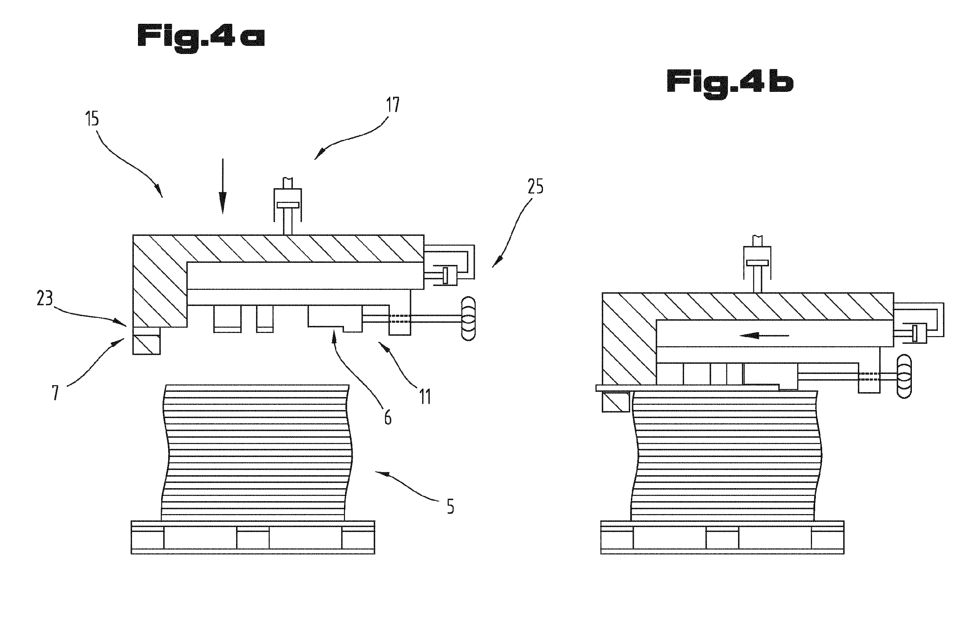

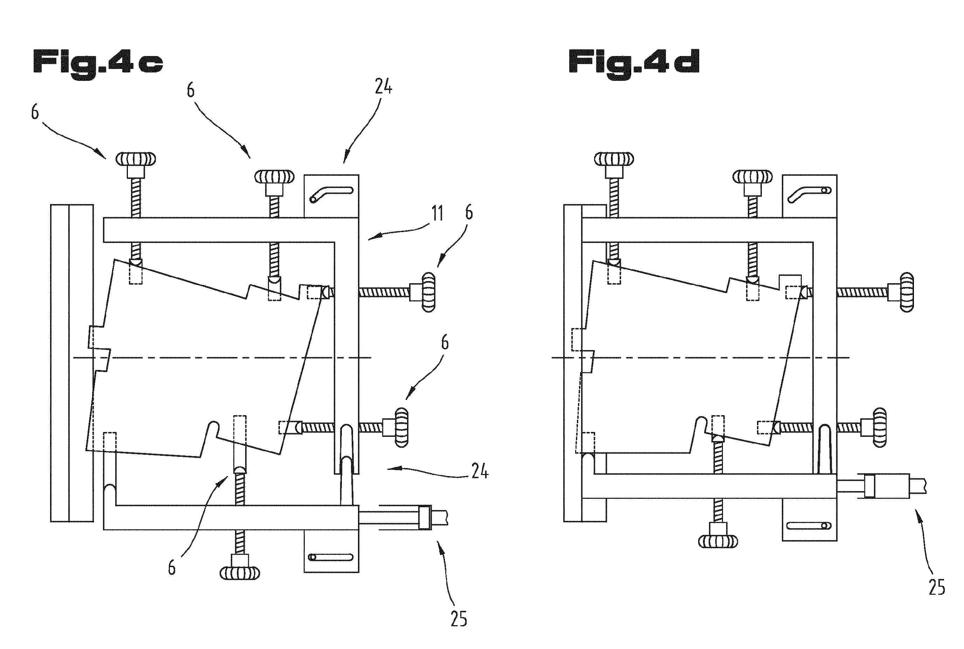

Fig. 4 a) bis d) zeigt eine weitere mögliche Ausbildung der erfindungsgemäßen Blechbereitstellungsvorrichtung, bei der die Übergabevorrichtung, die Vereinzelungsvorrichtung und die Ausrichtvorrichtung integriert angeordnet sind. Die Übergabevorrichtung 15 wird mittels eines Hubzylinders auf den Blechstapel 5 abgesenkt, sodass die Anlegemittel 6 den Blechstapel 5, insbesondere das oberste Blech kontaktieren. Anschließend wird die Ausrichtvorrichtung 11 aktiviert und das Blech an feststehende Anlegemittel sowie variable bzw. bewegliche Anlegemittel angelegt und durch Aktivierung der Ausrichtvorrichtung wird das zuoberst liegende Blech ausgerichtet. In den Fig. 4c und 4d ist dieser Vorgang dargestellt, wobei die Blickrichtung vom Blechstapel zur Ausrichtvorrichtung 11 gewählt ist. In der dargestellten Ausführung weist die Ausrichtvorrichtung 11 eine Kulissenführung 24 auf, wodurch es möglich ist, die Ausrichtvorrichtung 11 im geöffnetem Zustand auf einen grob ausgerichteten Blechstapel aufzubringen und durch Schließen der Ausrichtvorrichtung, also durch Bewegung des beweglichen Teils der Ausrichtvorrichtung entlang der Kulissenführung 24 werden die Anlegemittel 6 gegen das Blech gedrückt und dieses somit entsprechend der Vorgabe durch die Vorabausrichtung der Anlegemittel in die Vorzugsposition gebracht. Dies ist in Fig. 4d dargestellt. Wenn die Ausrichtung durchgeführt wurde, wird durch Aktivierung des Ausschubzylinders 25 das oberste Blech vereinzelt, in dem dieses durch einen Schlitz 23 der Vereinzelungsvorrichtung 7 ausgeschoben wird. Durch Veränderung der Schlitzbreite, beispielsweise durch einen Motorantrieb, kann die Vereinzelungsvorrichtung 7 auf unterschiedliche Blechdicken eingestellt werden.

Die Vorteile der erfindungsgemäßen Blechbereitstellungsvorrichtung liegen nun insbesondere darin, dass eine deutlich vereinfachte Ausrichtung und Vereinzelung der Bleche erreicht wird und für den weiteren Verarbeitungsprozess sicher gewährleistet werden kann, dass nur ein einzelnes Blech in der gewünschten Vorzugsausrichtung bereitgestellt wird, was insbesondere für eine automatisierte Fertigung von ganz besonderem Vorteil ist.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Des Weiteren können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

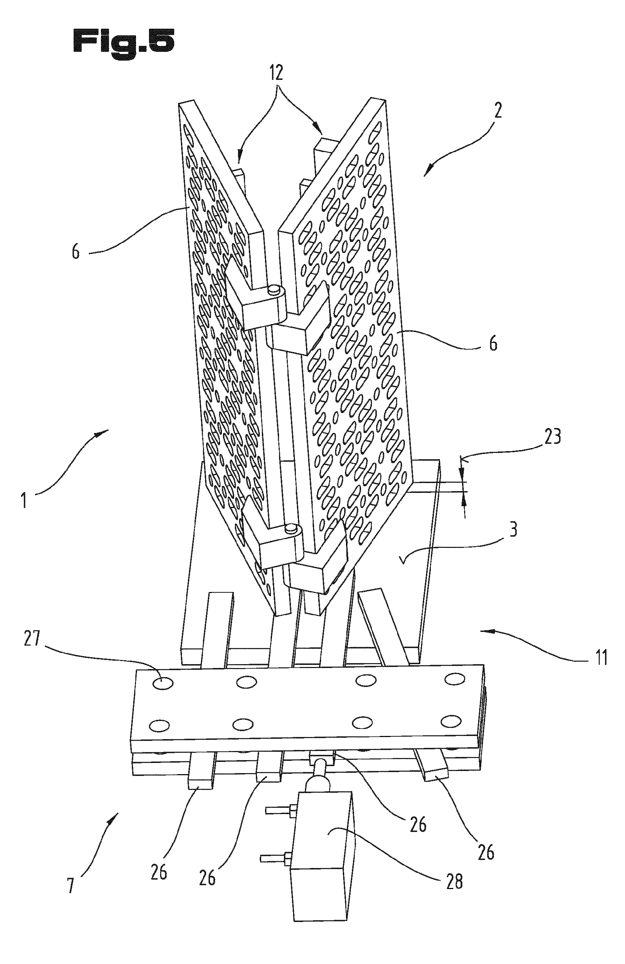

Fig. 5 zeigt eine weitere mögliche Ausbildung der erfindungsgemäßen Blechentnahmestation 1. Die Auflagefläche 3 der Aufnahmevorrichtung 2 ist dabei gegenüber der Horizontalen um einen Winkel geneigt, wobei gemäß dieser Ausführung, die Vereinzelungsvorrichtung 7 das zuunterst liegende Blech des Blechstapels durch einen Ausschubschlitz 23 ausschiebt und somit vereinzelt und dabei die über dem vereinzelten Blech angeordneten Bleche, durch eine nicht dargestellte Rückhaltevorrichtung, oder durch die Orientierungsmittel 12 zurückgehalten werden. Die Vereinzelungsvorrichtung 7 weist dazu einen oder mehrere Auswurffinger 26 auf, welche in einer Haltevorrichtung 27 angeordnet sind. Die Haltevorrichtung 27 ist beispielsweise durch eine Grundplatte und eine Gegendruckplatte gebildet, wobei dazwischen die Auswurffinger 26 derart angeordnet werden, dass sie die spezifische Kontur des zu vereinzelnden Blechteils kontaktieren und dadurch die gewünschte Vorzugsausrichtung festlegen. Bei der Ausrichtung bzw. beim Vereinzelungsvorgang werden die Auswurffinger 26, translatorisch angetrieben durch einen Druckzylinder 28 der Vereinzelungsvorrichtung 7, gegen die Kontur des zu vereinzelnden Blechs drücken und dieses somit in der gewünschten Vorzugsausrichtung vereinzeln. Diesbezüglich weist die Aufnahmevorrichtung 2 ein oder mehrere Anlegemittel 6 auf, im dargestellten Fall ist diese durch zwei gelenkig miteinander verbundene plattenförmige Bauteile mit darauf angeordneten Orientierungsmittel 12 gebildet. Zur Vereinfachung der Darstellung ist die Halterung der Anlegemittel 6 in Relation zur Auflagefläche 3 in der Figur nicht dargestellt. Durch ein Verschwenken der beiden Anlegemittel 6 und damit eine Veränderung des Öffnungswinkels zwischen den Anlegemittel 6, wird eine grundlegende Vorausrichtung der Blechteile gewährleistet. Zusätzlich können an den Anlegemittel 6 Orientierungsmittel 12 angeordnet sein, wobei die Orientierungsmittel 12 individueller auf die geometrische Figur des Blechteils angepasst und am Anlegemittel 6 wahlfrei bzw. in festgelegten Rasterpositionen angeordnet werden können. Durch Verändern des Öffnungswinkels der beiden Anlegemittel 6 lässt sich jedes Blechteil grundlegend vorausrichten und da ferner die Auflagefläche 3 gegenüber der Horizontalen geneigt ist, werden sich die Blechteile beim Anordnen in der Aufnahmevorrichtung 2 an den Anlegemittel 6 und insbesondere an den Orientierungsmittel 12 anlegen und es wird sich somit eine sehr gute Vorausrichtung einstellen. Die exakte Ausrichtung wird sich beim Vereinzeln einstellen, wobei eine geneigte Auflagefläche 3 dabei den Vorteil hat, dass die Gewichtskraft der angeordneten Blechteile auf das zu vereinzelnde Blech und damit die Ausschiebkraft die der Druckzylinder 28 aufzubringen hat, reduziert ist und somit die Gefahr von Kratzspuren auf den aneinander abgleitenden Blechoberflächen verringert wird.

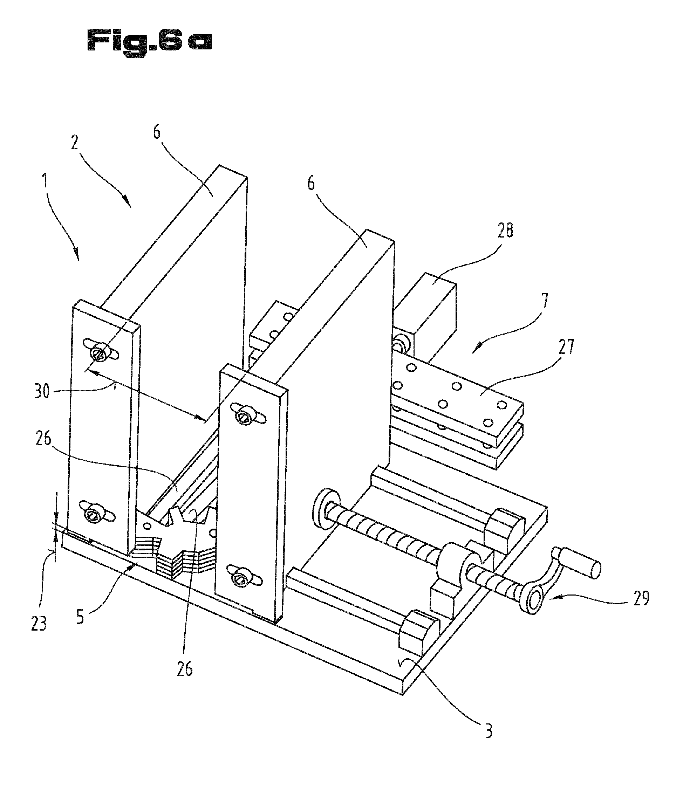

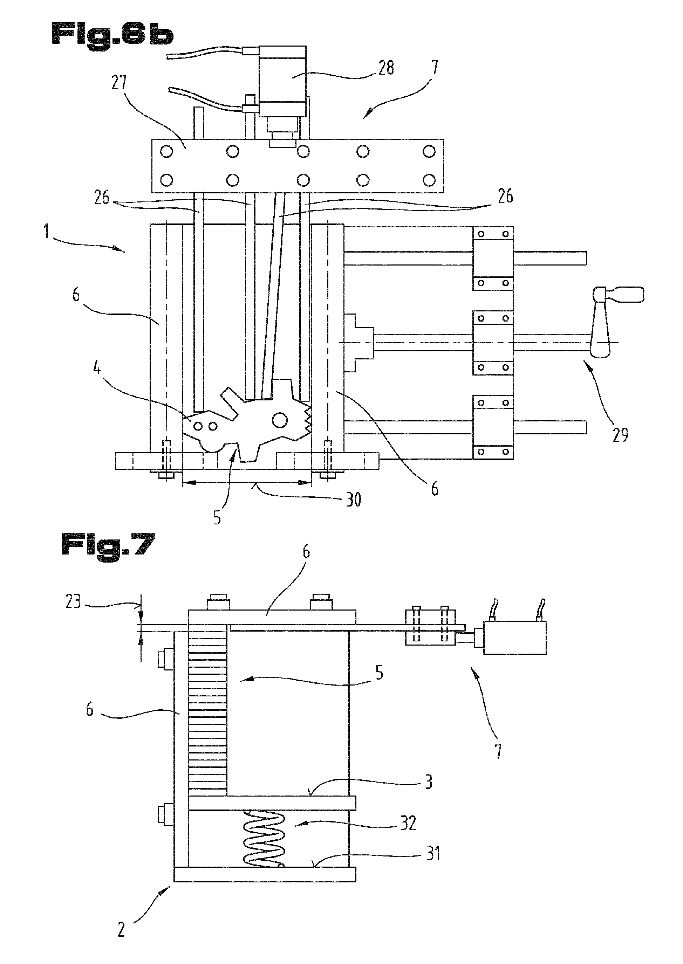

Die Fig. 6a und 6b zeigen eine weitere mögliche Ausbildung der erfindungsgemäßen Blechentnahmestation 1, bei der das vereinzelte Blech, wie in der vorherigen Ausbildung, am unteren Ende des Blechstapels 5 vereinzelt und ausgerichtet von einem Druckzylinder 28 der Vereinzelungsvorrichtung 7 durch einen Schlitz 23 ausgeschoben wird. Die Aufnahmevorrichtung 2 weist im dargestellten Fall zwei Anlegemittel 6 auf, welche relativ zur Aufnahmefläche 3, auf welcher der Blechstapel 5 angeordnet ist, über ein Stellmittel 29 in seiner Position veränderbar ist. Im dargestellten Fall ist ein Anlegemittel festgestellt bzw. festgeklemmt mit der Aufnahmefläche 3 verbunden, das zweite Anlegemittel 6 kann längs einer Parallelführung durch das Stellmittel 29 bewegt werden, sodass sich zwischen den Anlegemittel ein Spalt 30 veränderbarer Breite einstellt. Durch diesen Spalt 30 wird eine grobe Vorausrichtung der Bleche des Blechstapels 5 gewährleistet. Die Vereinzelungsvorrichtung 7 weist, ähnlich wie zuvor, mehrere Auswurffinger 26 auf, welche in einer Haltevorrichtung 27 angeordnet sind, wobei die Anordnung derart gebildet ist, dass sich die Auswurffinger 26 an markanten bzw. eindeutigen Konturen des Blechteils 4 anlegen und sodann bei Aktivierung des Druckzylinders 28 die Vereinzelungsvorrichtung 7, also die Haltevorrichtung 27 und die Auswurffinger 26, nach vor bewegt, und das zuunterst angeordnete Blechteil durch einen Ausschubschlitz 23 ausgerichtet und vereinzelt ausschiebt und an eine Übergabevorrichtung übergibt.

Fig. 6b zeigt eine Draufsicht auf die weitere Ausbildung nach Fig. 6a. Deutlich erkennbar ist, wie sich die Auswurffinger 26 an die Kontur der Blechteile des Blechstapels 5 anlegen und somit, zusammen mit der durch die Anlegemittel 6 festgelegten Breite 30, eine Vorausrichtung des Blechstapels erreicht wird. Ebenso können stirnseitig an den Anlegemittel 6 Rückhaltemittel angeordnet sein, welche durch Lösen einer Klemmverbindung eine Anpassung an die Blechteile und somit weitere Möglichkeit zur Herstellung einer Vorausrichtung bieten.

Fig. 7 zeigt eine weitere mögliche Ausbildung der erfindungsgemäßen Blechentnahmestation, bei der die Auflagefläche 3 gegenüber einer Grundfläche 31 der Aufnahmevorrichtung 2 durch ein Druckmittel 32 beabstandet angeordnet ist. Das Druckmittel kann beispielsweise durch eine Feder gebildet sein, es ist jedoch auch eine Ausbildung als pneumatischer oder hydraulischer Druckzylinder möglich, der die Auflagefläche 3, zusammen mit dem Blechstapel 5, insbesondere gegen das obere Anlegemittel 6 drückt, wobei der Druck derart gewählt ist, dass es zu keinem Klemmen der Blechteile des Blechstapels in der Aufnahmevorrichtung kommt, dass jedoch bei Aktivieren der Vereinzelungsvorrichtung 7, das am Blechstapel 5 zuoberst angeordnete Blech durch einen Schlitz 23 ausgeschoben wird. In dem in den Fig. 6 und 7 dargestellten Ausbildungen ist es ferner möglich, dass die Auflagefläche 3 gegenüber der Horizontalen geneigt ist, sodass sich die einzelnen Bleche des Blechstapels 5 aufgrund der Schwerkraft gegen ein Anlegemittel 6 anlegen und somit eine Vorausrichtung gegeben ist.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten der Blechaufnahmestation, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

In den Fig. 2 bis 4 sind weitere und gegebenenfalls für sich eigenständige Ausführungsform der Blechaufnahmestation gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Figuren hingewiesen bzw. Bezug genommen.

Der Ordnung halber sei abschließend darauf hingewiesen, dass zum besseren Verständnis des Aufbaus der Blechaufnahmestation diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Figuren gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Blechentnahmestation
- 2: Aufnahmevorrichtung
- 3: Auflagefläche
- 4: Blech
- 5: Blechstapel

- 6: Anlegemittel
- 7: Vereinzelungsvorrichtung
- 8: Blechaufnahmemittel
- 9: Vibrationselement
- 10: Vereinzeltes Blech

- 11: Ausrichtvorrichtung
- 12: Orientierungsmittel
- 13: Antriebsmittel
- 14: Vereinzeltes und ausgerichtetes Blech
- 15: Übergabevorrichtung

- 16: Blechaufnahmemittel
- 17: Hubzylinder
- 18: Blechaufnahmemittel
- 19: Druckzylinder
- 20: Federmittel

- 21: Winkel
- 22: Schräge Linearführung
- 23: Schlitz
- 24: Kulissenführung
- 25: Ausschubzylinder

- 26: Auswurffinger
- 27: Haltevorrichtung
- 28: Druckzylinder
- 29: Stellmittel
- 30: Spalt

- 31: Grundfläche
- 32: Druckmittel

## Patentansprüche

1. Blechentnahmestation (1) umfassend eine Aufnahmevorrichtung (2) für eine Mehrzahl von Blechen (4), eine Vereinzelungsvorrichtung (7), eine Ausrichtvorrichtung (11), und eine Übergabevorrichtung (15), wobei die Aufnahmevorrichtung (2) oder die Vereinzelungsvorrichtung (7) ein Vibrationselement (9) aufweist und die Übergabevorrichtung (15) ein Einzelblech (10) in einer Vorzugsausrichtung an eine nachgelagerte Bearbeitungsmaschine übergibt, **dadurch gekennzeichnet, dass** die Ausrichtvorrichtung (11) einen Ausschiebeschlitz (23) aufweist und eine Schlitzbreite des Ausschiebeschlitzes (23) kleiner als die doppelte Dicke des zu vereinzelnden Bleches (10) ist.

2. Blechentnahmestation nach Anspruch 1, **dadurch gekennzeichnet, dass** das Vibrationselement (1) durch einen Rotor mit exzentrischer Masse gebildet ist.

3. Blechentnahmestation nach einem der Ansprüche 1 oder 2, **dadurch gekennzeichnet, dass** die Vereinzelungsvorrichtung (7) in der Aufnahmevorrichtung (2) integriert angeordnet ist.

4. Blechentnahmestation nach Anspruch 3, **dadurch gekennzeichnet, dass** die Aufnahmevorrichtung (2) eine Auflagefläche (3) mit Anlegemittel (6) aufweist, wobei ferner das Vibrationselement (9) mit der Auflagefläche (3) bewegungsverbunden ist.

5. Blechentnahmestation nach einem der Ansprüche 1 bis 4, **dadurch gekennzeichnet, dass** die Auflagefläche (3) der Aufnahmevorrichtung (2) um einen Winkel gegenüber der Horizontalen geneigt ist.

6. Blechentnahmestation nach Anspruch 5, **dadurch gekennzeichnet, dass** der Winkel größer als arctan µ ist.

7. Blechentnahmestation nach Anspruch 5 oder 6, **dadurch gekennzeichnet, dass** die Aufnahmevorrichtung (2) ein Stellmittel zur Veränderung des Winkels aufweist.

8. Blechentnahmestation nach einem der Ansprüche 1 bis 7, **dadurch gekennzeichnet, dass** die Vereinzelungsvorrichtung (7) in der Ausrichtvorrichtung (11) integriert angeordnet ist.

9. Blechentnahmestation nach einem der Ansprüche 1 bis 8, **dadurch gekennzeichnet, dass** die Ausrichtvorrichtung (11) eine Anschlagvorrichtung und ein Gegendruckmittel aufweist.

10. Blechentnahmestation nach einem der Ansprüche 1 bis 9, **dadurch gekennzeichnet, dass** die Ausrichtvorrichtung (11) eine Kulissenführung (24) aufweist.

11. Blechentnahmestation nach einem der Ansprüche 1 bis 10, **dadurch gekennzeichnet, dass** die Schlitzbreite des Ausschiebeschlitz (23) einstellbar ausgebildet ist.

12. Blechentnahmestation nach einem der Ansprüche 1 bis 11, **dadurch gekennzeichnet, dass** die Übergabevorrichtung (15) durch einen Robotermanipulator mit einem Blechaufnahmemittel (16) gebildet ist, welches Blechaufnahmemittel (16) durch einen Greifaufsatz, oder einen Vakuumsauger, oder einem Magnethalter gebildet ist.

13. Blechentnahmestation nach Anspruch 12, **dadurch gekennzeichnet, dass** das Vibrationselement (9) im Blechaufnahmemittel (16) angeordnet ist.

14. Blechentnahmestation nach einem der Ansprüche 1 bis 13, **dadurch gekennzeichnet, dass** die Übergabevorrichtung (15) ein Gewichtserfassungsmittel aufweist.

15. Blechentnahmestation nach einem der Ansprüche 1 bis 14, **dadurch gekennzeichnet, dass** die Übergabevorrichtung (15) eine Dickenmessvorrichtung aufweist.

16. Blechentnahmestation nach Anspruch 8, **dadurch gekennzeichnet, dass** die Ausrichtvorrichtung (11) mehrere Auswurffinger (26) aufweist, welche in einer Haltevorrichtung (27) der Vereinzelungsvorrichtung (7) angeordnet sind.

17. Blechentnahmestation nach einem der Ansprüche 1 bis 16, **dadurch gekennzeichnet, dass** die Auflagefläche (3) gegenüber einer Grundfläche der Aufnahmevorrichtung (2) durch ein Druckmittel (32) beabstandet angeordnet ist.

18. Blechentnahmestation nach einem der Ansprüche 9 bis 17, **dadurch gekennzeichnet, dass** die Anschlagvorrichtung über ein Stellmittel (29) relativ zur Auflagefläche (3) verstellbar ausgebildet ist.

## Claims

1. Sheet metal removal station (1) comprising a receiving device (2) for a plurality of metal sheet (4), a separating device (7), an alignment device (11), and a transfer device (15), wherein the receiving device (2) or the separating device (7) comprises a vibratory element (9), and the transfer device (15) transfers a single metal sheet (10) in a preferred orientation to a downstream processing machine, **characterised in that** the alignment device (11) comprises an ejection slot (23) and the slot width of the ejection slot (23) is smaller than twice the thickness of the metal sheet (10) that is to be separated.

2. Sheet metal removal station according to claim 1, **characterised in that** the vibratory element (1) is by a rotor with an eccentric mass.

3. Sheet metal removal station according to either of claims 1 or 2, **characterised in that** the separating device (7) is arranged integrally in the receiving device (2).

4. Sheet metal removal station according to claim 3, **characterised in that** the receiving device (2) has a bearing surface (3) with setting means (6), wherein further the vibratory element (9) is movably connected to the bearing surface (3).

5. Sheet metal removal station according to any one of claims 1 to 4, **characterised in that** the bearing surface (3) of the receiving device (2) is inclined at an angle relative to the horizontal.

6. Sheet metal removal station according to claim 5, **characterised in that** the angle is greater than arctan µ.

7. Sheet metal removal station according to either of claims 5 or 6, **characterised in that** the receiving device (2) comprises an adjusting means for varying the angle.

8. Sheet metal removal station according to any one of claims 1 to 7, **characterised in that** the separating device (7) is arranged integrally in the alignment device (11).

9. Sheet metal removal station according to any one of claims 1 to 8, **characterised in that** the alignment device (11) comprises a limit stop device and a counter-pressure means.

10. Sheet metal removal station according to any one of claims 1 to 9, **characterised in that** the alignment device (11) has a sliding block guide (24).

11. Sheet metal removal station according to any one of claims 1 to 10, **characterised in that** the slot width of the ejection slot (23) is constructed so as to be adjustable.

12. Sheet metal removal station according to any one of claims 1 to 11, **characterised in that** the transfer device (15) is formed by a robot manipulator having a metal sheet receiving means (16), which metal sheet receiving means (16) is formed by a gripping attachment, or a suction device or a magnetic holder.

13. Sheet metal removal station according to claim 12, **characterised in that** the vibratory element (9) is arranged inside the metal sheet receiving means (16).

14. Sheet metal removal station according to any one of claims 1 to 13, **characterised in that** the transfer device (15) has a weight detection means.

15. Sheet metal removal station according to any one of claims 1 to 14, **characterised in that** the transfer device (15) has a thickness measuring device.

16. Sheet metal removal station according to claim 8, **characterised in that** the alignment device (11) comprises a plurality of ejection fingers (26) that are arranged in a holding apparatus (27) of the separating device (7).

17. Sheet metal removal station according to any one of claims 1 to 16, **characterised in that** the bearing surface (3) is disposed opposite a base surface of the receiving device (2) and at a distance therefrom by a pressure means (32).

18. Sheet metal removal station according to any one of claims 9 to 17, **characterised in that** the limit stop device is constructed such that it is displaceable relative to the bearing surface (3) via an adjusting means (29).

## Revendications

1. Station de prélèvement de tôles (1) comprenant un dispositif récepteur (2) pour un grand nombre de tôles (4), un dispositif d'individualisation (7), un dispositif d'orientation (11) et un dispositif de transfert (15), le dispositif récepteur (2) ou le dispositif d'individualisation (7) comprenant un élément vibrant (9), et le dispositif de transfert (15) transférant une tôle individuelle (10), selon une orientation préférentielle, à une machine d'usinage disposée en aval, **caractérisée en ce que** le dispositif d'orientation (11) comprend une fente d'extraction (23), et une largeur de fente de la fente d'extraction (23) est inférieure au double de l'épaisseur de la tôle (10) à individualiser.

2. Station de prélèvement de tôles selon la revendication 1, **caractérisée en ce que** l'élément vibrant (1) est formé d'un rotor comportant une masse excentrée.

3. Station de prélèvement de tôles selon l'une des revendications 1 ou 2, **caractérisée en ce que** le dispositif d'individualisation (7) est disposé intégré dans le dispositif récepteur (2).

4. Station de prélèvement de tôles selon la revendication 3, **caractérisée en ce que** le dispositif récepteur (2) comprend une surface d'assise (3) comportant des moyens d'appui (6), l'élément vibrant (9) étant en outre relié, avec possibilité de mouvement, à la surface d'assise (3).

5. Station de prélèvement de tôles selon l'une des revendications 1 à 4, **caractérisée en ce que** la surface d'assise (3) du dispositif récepteur (2) est inclinée selon un certain angle par rapport à l'horizontale.

6. Station de prélèvement de tôles selon la revendication 5, **caractérisée en ce que** l'angle est supérieur à arctan µ.

7. Station de prélèvement de tôles selon la revendication 5 ou 6, **caractérisée en ce que** le dispositif récepteur (2) comprend un organe de réglage pour modifier l'angle.

8. Station de prélèvement de tôles selon l'une des revendications 1 à 7, **caractérisée en ce que** le dispositif d'individualisation (7) est disposé intégré dans le dispositif d'orientation (11).

9. Station de prélèvement de tôles selon l'une des revendications 1 à 8, **caractérisée en ce que** le dispositif d'orientation (11) comprend un dispositif formant butée et un moyen de contre-pression.

10. Station de prélèvement de tôles selon l'une des revendications 1 à 9, **caractérisée en ce que** le dispositif d'orientation (11) comprend un guide de coulisse (24).

11. Station de prélèvement de tôles selon l'une des revendications 1 à 10, **caractérisée en ce que** la largeur de fente de la fente d'extraction (23) est configurée de façon à être réglable.

12. Station de prélèvement de tôles selon l'une des revendications 1 à 11, **caractérisée en ce que** le dispositif de transfert (15) est formé par un manipulateur robotisé comportant un moyen récepteur de tôle (16), lequel moyen récepteur de tôle (16) étant formé par un chapeau de préhension ou une ventouse, ou un aimant de retenue.

13. Station de prélèvement de tôles selon la revendication 12, **caractérisée en ce que** l'élément vibrant (9) est disposé dans le moyen récepteur de tôle (16).

14. Station de prélèvement de tôles selon l'une des revendications 1 à 13, **caractérisé en ce que** le dispositif de transfert (15) comprend un moyen de détermination du poids.

15. Station de prélèvement de tôles selon l'une des revendications 1 à 14, **caractérisée en ce que** le dispositif de transfert (15) comprend un dispositif de mesure de l'épaisseur.

16. Station de prélèvement de tôles selon la revendication 8, **caractérisée en ce que** le dispositif d'orientation (11) comprend plusieurs doigts d'éjection (26), qui sont disposés dans un dispositif de retenue (27) du dispositif d'individualisation (7).

17. Station de prélèvement de tôles selon l'une des revendications 1 à 16, **caractérisée en ce que** la surface d'assise (3) est disposée écartée d'une surface de base du dispositif récepteur (2) grâce à un moyen de pression (32).

18. Station de prélèvement de tôles selon l'une des revendications 9 à 17, **caractérisée en ce que** le dispositif de butée est configuré de façon à pouvoir être réglé par rapport à la surface d'assise (3) par l'intermédiaire d'un organe de réglage (29).
